# EUROPÄISCHE PATENTSCHRIFT

(11) **EP 2 771 205 B1**
(45) Veröffentlichungstag und Bekanntmachung des Hinweises auf die Patenterteilung: **12.12.2018**
(21) Anmeldenummer: 12778250.6
(22) Anmeldetag: 23.10.2012
(51) Int. Cl.: F16C 17/06, B60N 2/225, F16C 17/12

(54) **BESCHLAG FÜR EINEN FAHRZEUGSITZ UND FAHRZEUGSITZ**
FITTING FOR A VEHICLE SEAT AND VEHICLE SEAT
GARNITURE POUR UN SIÈGE DE VÉHICULE ET SIÈGE DE VÉHICULE

(30) Priorität: 25.10.2011 DE 102011117392; 06.01.2012 DE 102012000296
(43) Veröffentlichungstag der Anmeldung: 03.09.2014
(73) Patentinhaber: Adient Luxembourg Holding S.à r.l., 1855 Luxembourg (LU)
(72) Erfinder: SCHOLZ, Grit, 42897 Remscheid (DE)
(74) Vertreter: Liedhegener, Ralf
(86) Internationale Anmeldenummer: PCT/EP2012/004425
(87) Internationale Veröffentlichungsnummer: WO 2013/060443

(56) Entgegenhaltungen:
- WO-A1-2006/088896
- DE-A1-102008 028 094
- DE-A1-102010 062 414

## Beschreibung

Die Erfindung betrifft einen Beschlag für einen Fahrzeugsitz mit einem ersten Beschlagteil, an welchem ein Zahnkranz ausgebildet ist und einem zweiten Beschlagteil, an welchem ein Zahnrad ausgebildet ist, welches mit dem Zahnkranz kämmt, wodurch die beiden Beschlagteile miteinander in Getriebeverbindung stehen, und mit einem drehbar gelagerten, in Umfangsrichtung umlaufenden Exzenter zum Antrieb einer relativen Abwälzbewegung von Zahnrad und Zahnkranz, wobei der Exzenter in radialer Richtung mit seiner Außenseite in einer in einem Lagersitz, insbesondere in einem Kragenzug des ersten oder zweiten Beschlagteils, angeordneten Gleitlagerbuchse angeordnet ist.

Des Weiteren betrifft die Erfindung einen Fahrzeugsitz mit einem derartigen Beschlag.

### Stand der Technik

Die DE 44 11 214 A1 offenbart einen Beschlag für einen Fahrzeugsitz, bei dem eine aus einem gerollten Mehrschichtwerkstoff bestehende Gleitlagerbuchse mittels eines Kalibrierdorns in einen Lagersitz eines feingestanzten, gehärteten Zahnrades in axialer Richtung eingepresst wird. Bei diesem Kalibriervorgang werden Vorspannungen in radialer Richtung zwischen der Gleitlagerbuchse und dem Zahnrad erzeugt, die dem axialen Auswandern entgegenwirken. Durch den Trend im Automobilbau zu einer immer weiteren Festigkeitssteigerung bei gleichzeitiger Bauraumbeibehaltung oder -reduzierung werden dünnere Gleitlagerbuchsen notwendig. Die gerollten Gleitlagerbuchsen stellen gegenüber den ansonsten gehärteten Bauteilen im Kraftfluss des Beschlages die weichste Komponente des Beschlages dar. Eine daraus resultierende Verformung der Gleitlagerbuchse im Crashfall führt zu einem Überdeckungsverlust und somit zu einem Tragverlust an der Verzahnung im Bereich des Zahneingriffs zwischen den Beschlagteilen. Eine geringere Wandstärke der Gleitlagerbuchse führt zu einer geringeren Verformung derselben und somit zu einem geringeren Tragverlust. Eine dünne Wandstärke, insbesondere von weniger als 1mm, führt jedoch dazu, dass die für das Vermeiden des axialen Auswanderns notwendigen radialen Vorspannungen nicht mehr ausreichend gewährleistet sind.

Eine eingepresste Gleitlagerbuchse in einen gattungsgemäßen Beschlag offenbart auch die DE 20 2009 007 520 U1.

In der DE 10 2010 013 091 A1 wird als Axialsicherung einer Gleitlagerbuchse ein formschlüssiger Sicherungsbereich beschrieben, der vor oder nach dem Einpressen der Gleitlagerbuchse ausgebildet wird und der zum Lagerdurchmesser im Zahnteil einen Hinterschnitt bildet und somit das Auswandern des Gleitlagers verhindert. Die Ausbildung des Sicherungsbereiches ist durch die Umformfähigkeit des Gleitlagerbuchsenwerkstoffes begrenzt. Hohe Toleranzanforderungen an die Lagerstelle bedingen einen vergleichsweise aufwendigen Umformprozess.

Aufgrund der hohen Kräfte, die während des Einbringens einer Gleitlagerbuchse in deren Lagersitz durch Einpressen oder Umformen entstehen, muss die Gleitlagerbuchse möglichst steif ausgebildet sein. Die Verwendung von Gleitlagerbuchsen, die aus einem um 360° gerolltem Werkstoff mit unverbunden gegenüberliegenden Enden besteht, ist daher nicht oder nur sehr eingeschränkt möglich. Die Enden werden daher in den meisten Anwendungsfällen miteinander verbunden, insbesondere verclincht oder laserverschweißt.

Bei einem in der DE10 2008 028 094 A1 offenbarten Beschlag ist eine stoffschlüssige Verbindung eines außen auf einen Kragenzug aufgesetzten Gleitlagerringes mit diesem Kragenzug durch Schweißen, Kleben, Löten oder Aufpressen vorgesehen. Dieser Stoffschluss ist notwendig, da bei einem auf der Außenseite eines Kragenzugs angeordneten Gleitlagerring das Problem besteht, dass insbesondere keine geschlitzten Ringe aufkalibriert werden können, da ausreichende Spannungen zur reibkraftschlüssigen Sicherung zwischen dem Gleitlagerring und dem Kragenzug nicht aufgebaut werden können.

In der US 2011 0169312 A1 ist ein ungeschlitzter Gleitlagerring offenbart, der kraftschlüssig auf dem Kragenzug eines Beschlagteils befestigt ist, indem sein Innendurchmesser kleiner ist als der Kragenzugaußendurchmesser.

Die insbesondere kunststoffbeschichtete Laufseite der in den beiden letztgenannten Druckschriften beschriebenen Gleitlagerringe ist an deren äußerem Umfang. Die eingepressten Gleitlagerbuchsen hingegen haben die Laufseite in der inneren Umfangsfläche.

Ein aus der DE 20 2009 007 520 U1 bekanntes Schweißverfahren für eine Welle-Buchsen-Verbindung lässt sich nicht auf dünnwandige, kunststoffbeschichtete Gleitlagerbuchsen übertragen.

Die WO 2006/088896 A1 offenbart einen Beschlag für einen Fahrzeugsitz, mit einem ersten Beschlagteil, an welchem ein Zahnkranz ausgebildet ist, einem zweiten Beschlagteil, an welchem ein Zahnrad ausgebildet ist, welches mit dem Zahnkranz kämmt, wodurch die beiden Beschlagteile miteinander in Getriebeverbindung stehen, und einem drehbar gelagerten, in Umfangsrichtung umlaufenden Exzenter zum Antrieb einer relativen Abwälzbewegung von Zahnrad und Zahnkranz, wobei der Exzenter in radialer Richtung mit seiner Außenseite in einer in einem Lagersitz, insbesondere in einem Kragenzug des ersten oder zweiten Beschlagteils, angeordneten Gleitlagerbuchse angeordnet ist.

Die DE 10 2010 062 414 A1 offenbart einen Beschlag für einen Fahrzeugsitz, mit einem ersten Beschlagteil, an welchem ein Zahnkranz ausgebildet ist, einem zweiten Beschlagteil, an welchem ein Zahnrad ausgebildet ist, welches mit dem Zahnkranz kämmt, wodurch die beiden Beschlagteile miteinander in Getriebeverbindung stehen, und einem drehbar gelagerten, in Umfangsrichtung umlaufenden Exzenter zum Antrieb einer relativen Abwälzbewegung von Zahnrad und Zahnkranz, wobei der Exzenter in radialer Richtung mit seiner Innenseite in einer ersten Gleitlagerbuchse angeordnet ist. Die erste Gleitlagerbuchse umgreift eine zweite Gleitlagerbuchse. Die zweite Gleitlagerbuchse ist auf einem Kragenzug angeordnet und mittels einer Verdrehsicherung formschlüssig auf dem Kragenzug gesichert. Die zweite Gleitlagerbuchse trägt am äußeren Umfang eine Gleitbeschichtung, insbesondere einen Kunststoffüberzug.

### Aufgabe

Der Erfindung liegt die Aufgabe zu Grunde, einen Beschlag der eingangs genannten Art zu verbessern, insbesondere eine Möglichkeit zu schaffen, Gleitlager mit Gleitlagerbuchsen geringer Wandstärke und einer Kunststoffbeschichtung der Lauffläche zu ermöglichen. Des Weiteren soll ein für die Montage und Betriebsfestigkeit notwendiges kostenaufwendiges Verclinchen oder Laserverschweißen des Spaltes zwischen den gegenüberliegenden Enden von gerollten Gleitlagerbuchsen entfallen können. Zur Gewährleistung der Ausdrückkräfte des Gleitlagers aus dem Lagersitz sollen keine hohen Toleranzanforderungen an die Gleitlagerbuchse und den Lagersitz erforderlich sein.

### Lösung

Diese Aufgabe wird erfindungsgemäß durch einen Beschlag gelöst, mit einem ersten Beschlagteil, an welchem ein Zahnkranz ausgebildet ist, einem zweiten Beschlagteil, an welchem ein Zahnrad ausgebildet ist, welches mit dem Zahnkranz kämmt, wodurch die beiden Beschlagteile miteinander in Getriebeverbindung stehen, und einem drehbar gelagerten, in Umfangsrichtung umlaufenden Exzenter zum Antrieb einer relativen Abwälzbewegung von Zahnrad und Zahnkranz, wobei der Exzenter in radialer Richtung mit seiner Außenseite in einer in einem Lagersitz, insbesondere in einem Kragenzug des ersten oder zweiten Beschlagteils, angeordneten Gleitlagerbuchse angeordnet ist, wobei die Gleitlagerbuchse mit dem Lagersitz stoffschlüssig mittels Laserschweißens verbunden ist, die Gleitlagerbuchse eine Wandstärke von weniger als 1mm aufweist und die Laufseite der Gleitlagerbuchse kunststoffbeschichtet ist.

Dadurch, dass die Gleitlagerbuchse mit dem Lagersitz stoffschlüssig mittels Laserschweißens verbunden ist, ist es möglich, kunststoffbeschichtete Gleitlager mit derart dünner Wandstärke zu verbauen. Die Wandstärke der Gleitlagerbuchse muss nicht auf die aufzubringenden, notwendigen Reibkräfte zwischen Lagersitz und Gleitlagerbuchse ausgelegt werden. Die stoffschlüssige Sicherung der Gleitlagerbuchse in dem Lagersitz ermöglicht es zudem, die sich gegenüberliegenden Enden der Gleitlagerbuchse unverbunden zu lassen, weil aufgrund der geringeren Anforderungen an die Reibkraft die Steifigkeitsanforderungen an die Gleitlagerbuchse ebenfalls geringer sein können. Gegenüber einer rein reibkraftschlüssigen Verbindung zwischen Lagersitz und Gleitlagerbuchse unterliegen die Toleranzen der einzelnen Gleitlagerbauteile geringeren Anforderungen.

Im Vergleich zu anderen Schweißverfahren erfolgt beim Laserschweißen ein geringerer Energieeintrag in das Beschlagteil, den Lagersitz und die Gleitlagerbuchse und somit ein geringerer thermischer Verzugs der Bauteile. Die Laufseiten der Gleitlagerbuchsen können kunststoffbeschichtet sein, da die thermische Belastung beim Laserschweißen entsprechend gering ist und die Beschichtung nicht thermisch zerstört wird.

In bevorzugter Ausführung ist der Lagersitz an dem einen der beiden Beschlagteile vorgesehen und die Gleitlagerbuchse im Bereich der von dem anderen der beiden Beschlagteile weg weisenden Stirnseite der Gleitlagerbuchse mittels einer Laserschweißnaht mit dem Lagersitz verbunden. Eine solche Anordnung ist während des Schweißprozesses besonders gut zugänglich. Die Laserschweißnaht kann dabei entlang des insbesondere kreisförmigen Umfangs der Gleitlagerbuchse mehrfach unterbrochen ausgebildet sein oder als umlaufende Laserschweißnaht ausgeführt sein, die eine besonders hohe Festigkeit bietet. Drei unter einem Winkel von 120° am Umfang der Gleitlagerbuchse verteilte Heftpunkte erweisen sich als besonders kostengünstig.

Vorzugsweise ist der Lagersitz ein Kragenzug des ersten oder zweiten Beschlagteils. Diese einteilige Ausführung stellt einen sehr kostengünstigen Lagersitz dar.

Zur Erzeugung eines Beschlagteil-Baukastens eignet sich ein Lagersitz, der aus einer am ersten oder zweiten Beschlagteil befestigten separaten Hülse besteht. Die werkzeugkostenintensive Grundgeometrie der Beschlagteile ist dadurch für alle Varianten identisch. Eine Varianz im Bereich des Lagersitzes, insbesondere unterschiedliche axiale Längen des Lagersitzes, lässt sich durch unterschiedliche Hülsen erzeugen. Auch extreme Lagersitzgeometrien, die sich nicht als gezogener Kragen erzeugen lassen, sind durch die Verwendung von Hülsen einfach herstellbar.

Bevorzugt werden Gleitlagerbuchsen eingesetzt, die eine zylindrische Grundform aufweisen, deren beiden Enden sich unverbunden gegenüber liegen. Der Verzicht auf eine Verbindung der Enden, wie diese beispielsweise mittels einer Clinchverbindung erfolgen kann, reduziert die Kosten der Gleitlagerbuchse erheblich.

Zur Reduzierung des Bauteilvolumens des Beschlages und zur Festigkeitssteigerung des Beschlags eignen sich besonders Gleitlagerbuchsen mit einer Wandstärke von etwa 0.5mm.

Eine weitere Erhöhung der Festigkeit gegen axiales Auswandern der Gleitlagerbuchse aus dem Lagersitz in einer axialen Richtung wird durch Umstellen eines der beiden axialen Enden der Gleitlagerbuchse radial nach außen erreicht. Dadurch kann sich die Gleitlagerbuchse am Lagersitz in axialer Richtung abstützen. Die Umstellung kann mittels dem Fachmann bekannter Verfahren erfolgen, besonders bevorzugt durch ein Umbördeln.

Durch Umstellen des Gleitlagerrandes auf beiden axialen Seiten können axiale Anlaufstellen erzeugt werden, d.h. axiale Lagerflächen, die das Betätigungsmoment des Beschlages reduzieren, indem sie eine Abstützfunktion

(zur Reibungsminimierung) der beiden Beschlagteile zueinander oder eines der Beschlagteile zu angrenzenden, relativ bewegten Bauteilen, wie einem Mitnehmer, gewährleisten. Bei einer derartigen Ausführungsform kann eines der beiden Enden erst nach dem Einführen der Gleitlagerbuchse in den Lagersitz umgestellt werden. Vorzugsweise ist aber genau eines der beiden umgestellten Enden bereits vor dem Einführen der Gleitlagerbuchse in den Lagersitz umgestellt und wirkt somit während des Einführens der Gleitlagerbuchse in den Lagersitz als axialer Anschlag.

### Figuren und Ausführungsformen der Erfindung

Im Folgenden ist die Erfindung anhand von fünf in den Zeichnungen dargestellter Ausführungsbeispiele näher erläutert. Es zeigen
- Fig. 1: eine perspektivische Darstellung des ersten Ausführungsbeispiels,
- Fig. 2: eine schematische Darstellung eines Fahrzeugsitzes mit einem Beschlag,
- Fig. 3: einen axialen Schnitt durch das erste Ausführungsbeispiel,
- Fig. 4: eine perspektivische Darstellung des zweiten Ausführungsbeispiels,
- Fig. 5: einen axialen Schnitt durch das zweite Ausführungsbeispiel,
- Fig. 6: einen axialen Schnitt durch das dritte Ausführungsbeispiel,
- Fig. 7: einen Draufsicht auf das erste Beschlagteil des vierten Ausführungsbeispiels und
- Fig. 8: einen axialen Schnitt durch das erste Beschlagteil des fünften Ausführungsbeispiels.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Dabei kann in Umfangsrichtung der Antriebswelle 7 ein kleiner Freilaufwinkel zwischen Antriebswelle 7 und einem der Beschläge 10 zum Toleranzausgleich vorgesehen sein. Die Antriebswelle 7 definiert die Achse eines Zylinderkoordinatensystems, das für die nachfolgend verwendeten Richtungsangaben herangezogen wird. Die Richtungsangaben sind so breit auszulegen, dass diese ungeachtet einer geringen Ungenauigkeit, resultierend aus einer nachfolgend beschriebenen Taumelbewegung relativ zwischen einzelnen Bauteilen des Beschlages 10, gelten und zusätzlich Abweichungen aus fertigungsbedingten Bauteiltoleranzen umfassen.

Der Beschlag 10 weist ein erstes Beschlagteil 11 und ein zweites Beschlagteil 12 auf, welche relativ zueinander verdrehbar sind. Mit der Montage des Beschlages 10 ist das erste Beschlagteil 11 beispielsweise fest mit der Struktur der Lehne 4 des Fahrzeugsitzes 1 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne und Sitzteil, weshalb die beide Beschlagteile 11 und 12 aus Metall bestehen, vorzugsweise aus Stahl.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, vorliegend und insbesondere mittels eines selbsthemmenden Exzenterumlaufgetriebes, wie dies beispielsweise aus der DE 195 48 809 C1 bekannt ist, auf deren Offenbarungsgehalt diesbezüglich ausdrücklich Bezug genommen wird.

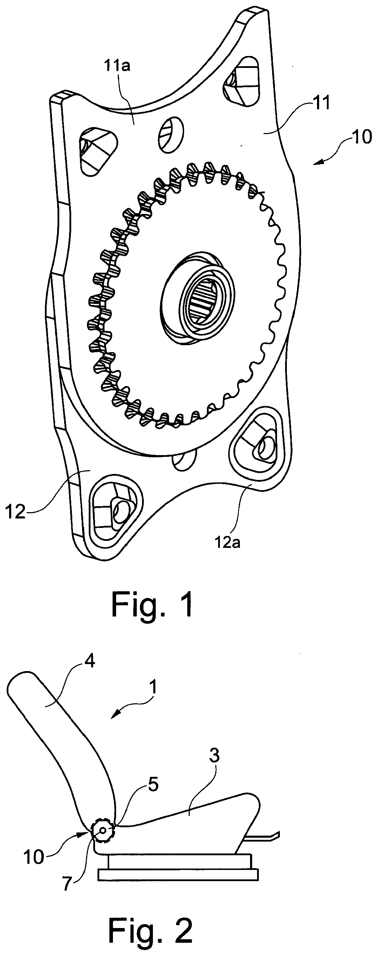

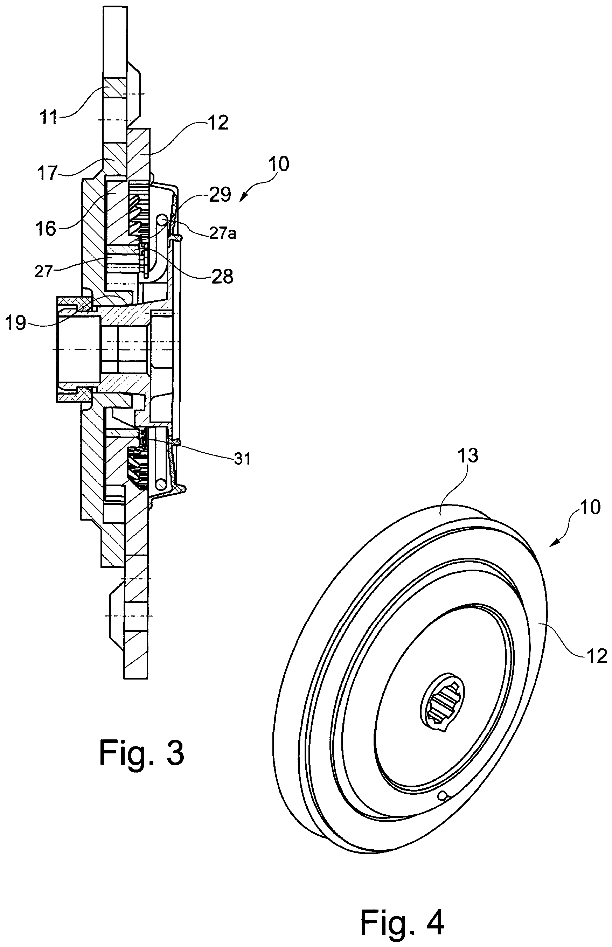

Im ersten Ausführungsbeispiel (Fig. 1, 3) weist das erste Beschlagteil 11 einen ersten Flanschbereich 11a und das zweite Beschlagteil 12 einen zweiten Flanschbereich 12a auf, welche jeweils von einem scheibenförmigen Bereich der Beschlagteile 11, 12 seitlich abstehen und der Anbindung an das Sitzteil 3 und die Lehne 4 dienen. Zur Aufnahme der axial wirkenden Kräfte, also zum Zusammenhalt der Beschlagteile 11 und 12, sind (in den Fig. 1 und 3 nicht dargestellte) Halteklammern vorgesehen, von denen eine beispielsweise in der EP 1 423 294 B1 gezeigt ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16.

Das zweite Beschlagteil 12 weist konzentrisch zum Zahnrad 16 einen Lagersitz 29 auf. Der Lagersitz 29 ist als Kragenzug an dem zweiten Beschlagteil 12 angeformt und somit einstückig an diesem ausgebildet. In alternativer Ausführung ist der Lagersitz eine Lagerbohrung oder ist als separate Hülse am zweiten Beschlagteil 12 befestigt.

Auf einem Kragen 19 des ersten Beschlagteils 11 sind zwei Keilsegmente 27 eines Exzenters mit ihren gekrümmten Innenflächen abgestützt. Mit den gekrümmten Außenflächen der Keilsegmente 27 wird das zweite Beschlagteil 12 gelagert. Hierfür ist der Lagersitz 29 des zweiten Beschlagteils 12 mit einer stoffschlüssig darin befestigten Gleitlagerbuchse 28 ausgekleidet, an der die Außenflächen der Keilsegmente 27 anliegen.

Durch die Keilsegmente 27 und eine diese voneinander weg vorspannende Feder 27a wird ein Exzenter definiert, welcher in Richtung der Exzentrizität das Zahnrad 16 an einer Eingriffsstelle in den Zahnkranz 17 drückt. Bei einem Antrieb des Exzenters, vorliegend mittels der Antriebswelle 7, gleiten die Keilsegmente 27 entlang der Gleitlagerbuchse 28 unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung zwischen dem ersten Beschlagteil 11 und dem zweiten Beschlagteil 12. Die Neigung der Lehne ist dadurch zwischen mehreren Gebrauchsstellungen stufenlos einstellbar.

Die Gleitlagerbuchse 28 ist vorliegend geschlitzt, d.h. zwei Enden des zylindrischen Gleitlagers liegen einander ohne Verbindung gegenüber. In Abwandlungen der Ausführungsbeispiele sind die Enden miteinander verclincht oder die Gleitlagerbuchse ist als ungeschlitzter Zylinder ausgebildet.

Die Gleitlagerbuchse 28 ist an ihrer vom ersten Beschlagteil 11 weg weisenden Stirnseite mittels einer umlaufenden Laserschweißnaht 31 mit dem Lagersitz 29 des zweiten Beschlagteils 12 verbunden. In Abwandlungen des Ausführungsbeispiels ist die Gleitlagerbuchse 28 an ihrer zum ersten Beschlagteil 11 hin weisenden Stirnseite oder an beiden Stirnseiten mit dem Lagersitz 29 durch eine Laserschweißnaht verbunden. Alternativ zu einer umlaufenden Laserschweißnaht kann die Laserschweißnaht aus mehreren Segmentabschnittsnähten bestehen.

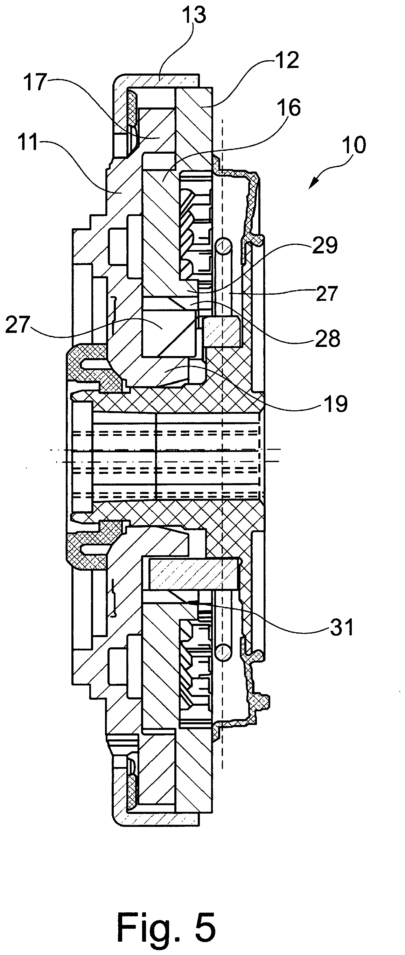

Das Getriebe des zweiten Ausführungsbeispiels (Fig. 4, 5) ist weitgehend gleich ausgebildet wie das des ersten Ausführungsbeispiels. Die beiden Beschlagteile 11 und 12 sind jedoch insbesondere hinsichtlich der Anbindung an das Sitzteil 3 und die Lehne 4 unterschiedlich ausgebildet. Aufgrund der funktionellen Ähnlichkeiten tragen sie dennoch die gleichen Bezugszeichen wie diejenigen des ersten Ausführungsbeispiels.

Die beiden Beschlagteile 11 und 12 lassen sich jeweils näherungsweise in eine kreisrunde Scheibenform einbeschreiben, die jeweils Geometrien, insbesondere Absätze oder Nocken im Bereich ihrer nach außen weisenden Fläche zur Befestigung an dem Sitzteil 3 bzw. an der Lehne 4 aufweisen. Zur Aufnahme der axial wirkenden Kräfte, also zum Zusammenhalt der Beschlagteile 11 und 12, ist ein Umklammerungsring 13 vorgesehen. Der vorzugsweise metallische Umklammerungsring 13 ist fest mit dem zweiten Beschlagteil 12 verbunden, vorliegend verschweißt. Mittels eines radial nach innen weisenden Randes übergreift der Umklammerungsring 13, gegebenenfalls unter Zwischenlage eines separaten Gleitrings, das relativ zu ihm bewegliche erste Beschlagteil 11 radial außen, ohne die Relativdrehung der beiden Beschlagteile 11 und 12 zu behindern. In baulicher Hinsicht bilden die beiden Beschlagteile 11 und 12 daher zusammen mit dem Umklammerungsring 13 eine scheibenförmige Einheit.

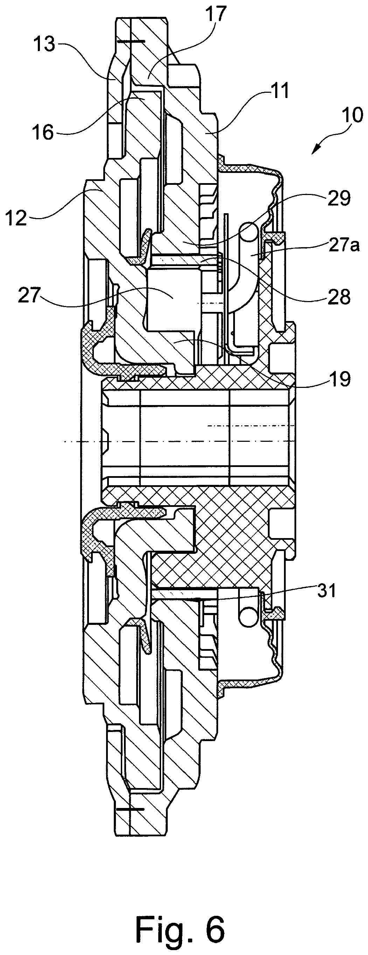

Das dritte Ausführungsbeispiel (Fig. 6) entspricht bezüglich der stoffschlüssigen Befestigung des Gleitlagers 28 am Lagersitz 29 dem zweiten Ausführungsbeispiel, jedoch ist die Lageranordnung im Vergleich zum zweiten Ausführungsbeispiel hinsichtlich der Beschlagteile vertauscht: Das erste Beschlagteile 11 weist konzentrisch zum Zahnkranz 17 den Lagersitz 29 auf. Der Kragen 19 ist als Kragenzug an dem zweiten Beschlagteil 12 angeformt sein, d.h. einstückig daran ausgebildet oder als separate Hülse daran befestigt.

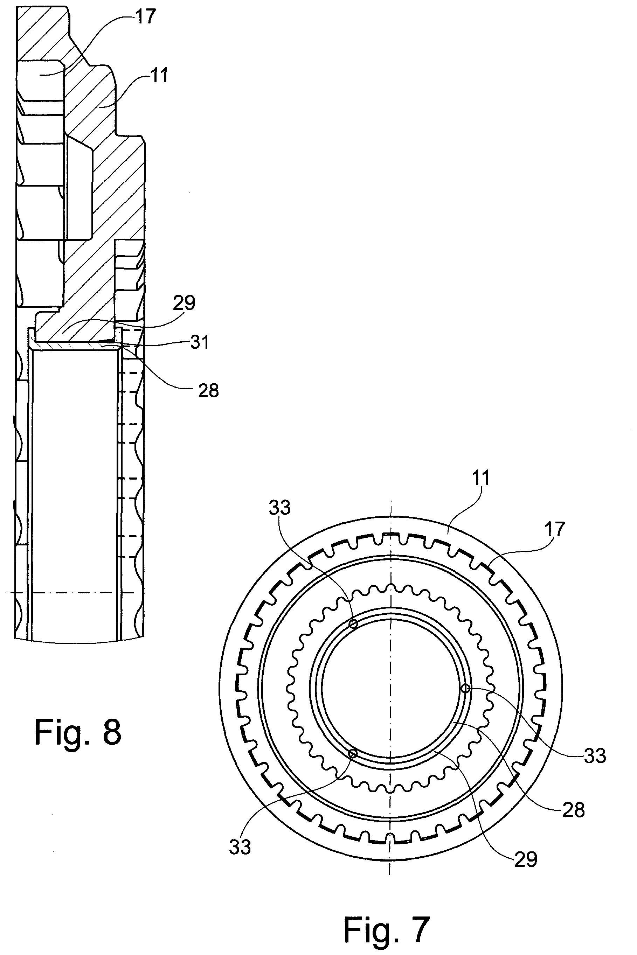

Im vierten Ausführungsbeispiel (Fig. 7), das dem dritten Ausführungsbeispiel bis auf Details der stoffschlüssigen Verbindung zwischen der Gleitlagerbuchse 28 und dem ersten Beschlagteil 11 entspricht, ist die Gleitlagerbuchse 28 durch mehrere, vorzugsweise und vorliegend drei unter 120° am Umfang verteilte Heftpunkte 33 mit dem Lagersitz 29 des ersten Beschlagteils 11 verbunden, insbesondere laserverschweißt.

Im fünften Ausführungsbeispiel (Fig. 8) weist die zylindrische Grundform der Gleitlagerbuchse 28 eine dünne Wandstärke von weniger als 1mm, insbesondere etwa 0,5mm auf und hat an ihren beiden axialen Enden jeweils einen umgestellten Rand. Die beiden axialen Enden der Gleitlagerbuchse 28 werden dazu nach der Montage in den Lagersitz 29 und nach dem Erzeugen einer Laserschweißnaht 31 zwischen der Gleitlagerbuchse 28 und dem Lagersitz 29 des ersten Beschlagteils 11 radial nach außen umgestellt, insbesondere umgebördelt. Dadurch wird die Gleitlagerbuchse 28 zusätzlich formschlüssig mit dem Lagersitz 29 verbunden und bildet eine axiale Lagerfläche, die das Betätigungsmoment des Beschlages reduziert, indem sie eine Abstützfunktion zur Reibungsminimierung der beiden Beschlagteile zueinander oder eines der Beschlagteile zu angrenzenden, relativ bewegten Bauteilen, wie einem Mitnehmer, gewährleistet.

In abgewandelter Ausführung weist die Gleitlagerbuchse 28 bereits vor der Montage an genau einem axialen Ende einen radial nach außen umgestellten Rand auf. Nach dem Einbringen in den Lagersitz 29 wird das gegenüberliegende axiale Ende umgebördelt .

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 11a: erster Flanschbereich
- 12: zweites Beschlagteil
- 12a: zweiter Flanschbereich
- 13: Umklammerungsring
- 16: Zahnrad
- 17: Zahnkranz
- 19: Kragen
- 27: Keilsegment
- 27a: Feder
- 28: Gleitlagerbuchse
- 29: Lagersitz, Kragenzug
- 31: Laserschweißnaht
- 33: Heftpunkte

## Patentansprüche

1. Beschlag für einen Fahrzeugsitz, insbesondere für einen Kraftfahrzeugsitz, mit einem ersten Beschlagteil (11), an welchem ein Zahnkranz (17) ausgebildet ist, einem zweiten Beschlagteil (12), an welchem ein Zahnrad (16) ausgebildet ist, welches mit dem Zahnkranz (17) kämmt, wodurch die beiden Beschlagteile (11, 12) miteinander in Getriebeverbindung stehen, und einem drehbar gelagerten, in Umfangsrichtung umlaufenden Exzenter zum Antrieb einer relativen Abwälzbewegung von Zahnrad (16) und Zahnkranz (17), wobei der Exzenter in radialer Richtung mit seiner Außenseite in einer in einem Lagersitz (29), insbesondere in einem Kragenzug (29) des ersten oder zweiten Beschlagteils (11, 12), angeordneten Gleitlagerbuchse (28) angeordnet ist, **dadurch gekennzeichnet, dass** die Gleitlagerbuchse (28) eine Wandstärke von weniger als 1mm aufweist und mit dem Lagersitz (29) stoffschlüssig mittels Laserschweißens verbunden ist, wobei die Laufseite der Gleitlagerbuchse (28) kunststoffbeschichtet ist.

2. Beschlag nach Anspruch 1, **dadurch gekennzeichnet, dass** der Lagersitz (29) an dem einen der beiden Beschlagteile (11, 12) vorgesehen ist und die Gleitlagerbuchse (28) im Bereich der von dem anderen der beiden Beschlagteile (11, 12) weg weisenden Stirnseite der Gleitlagerbuchse (28) mit dem Lagersitz (29) verbunden ist.

3. Beschlag nach einem der Ansprüche 1 bis 2, **dadurch gekennzeichnet, dass** die Gleitlagerbuchse (28) mit dem Lagersitz (29) mittels einer umlaufenden Laserschweißnaht (31) verbunden ist.

4. Beschlag nach einem der Ansprüche 1 bis 2, **dadurch gekennzeichnet, dass** die Gleitlagerbuchse (28) mit dem Lagersitz (29) mittels dreier unter einem Winkel von 120°am Umfang der Gleitlagerbuchse vert eilter Heftpunkte (33) verbunden ist.

5. Beschlag nach einem der Ansprüche 1 bis 4, **dadurch gekennzeichnet, dass** der Lagersitz (29) als separate Hülse am ersten oder zweiten Beschlagteil (11, 12) befestigt ist.

6. Beschlag nach einem der Ansprüche 1 bis 5, **dadurch gekennzeichnet, dass** die Gleitlagerbuchse (28) eine zylindrische Grundform aufweist und sich die beiden Enden der Gleitlagerbuchse (28) unverbunden gegenüber liegen.

7. Beschlag nach Anspruch 6, **dadurch gekennzeichnet, dass** sich die beiden Enden der Gleitlagerbuchse (28) unverbunden gegenüber liegen.

8. Beschlag nach einem der Ansprüche 1 bis 7, **dadurch gekennzeichnet, dass** die Gleitlagerbuchse (28) eine Wandstärke von etwa 0,5mm aufweist.

9. Beschlag nach einem der Ansprüche 1 bis 8, **dadurch gekennzeichnet, dass** eines der beiden axialen Enden der Gleitlagerbuchse (28) radial nach außen umgestellt ist.

10. Beschlag nach einem der Anspruch 9, **dadurch gekennzeichnet, dass** eines der beiden axialen Enden der Gleitlagerbuchse (28) radial nach außen umgebördelt ist.

11. Beschlag nach Anspruch 9 oder 10, **dadurch gekennzeichnet, dass** beide axialen Enden der Gleitlagerbuchse (28) radial nach außen umgestellt sind.

12. Beschlag nach Anspruch 11, **dadurch gekennzeichnet**, genau eines der beiden umgestellten Enden bereits vor der Montage der Gleitlagerbuchse (28) in den Lagersitz (29) umgestellt ist.

13. Fahrzeugsitz mit einem Beschlag nach einem der Ansprüche 1 bis 12.

## Claims

1. Fitting for a vehicle seat, in particular for a motor vehicle seat, having a first fitting member (11) on which a toothed ring (17) is formed, a second fitting member (12) on which a toothed wheel (16) is formed and engages with the toothed ring (17), whereby the two fitting members (11, 12) are connected to each other in gearing terms, and having a rotatably supported eccentric which extends in a peripheral direction for driving a relative rolling movement of the toothed wheel (16) and toothed ring (17), wherein the eccentric is arranged in a radial direction with the outer side thereof in a plain bearing bush (28) which is arranged in a bearing seat (29), in particular in an extruded collar (29) of the first or second fitting member (11, 12), **characterized in that** the plain bearing bush (28) has a wall thickness of less than 1 mm and is connected to the bearing seat (29) in a materially integral manner by means of laser welding, wherein the running side of the plain bearing bush (28) is coated with plastics material.

2. Fitting according to Claim 1, **characterized in that** the bearing seat (29) is provided on one of the two fitting members (11, 12) and the plain bearing bush (28) is connected to the bearing seat (29) in the region of the end face of the plain bearing bush (28) facing away from the other of the two fitting members (11, 12).

3. Fitting according to either Claim 1 or Claim 2, **characterized in that** the plain bearing bush (28) is connected to the bearing seat (29) by means of a peripheral laser weld seam (31).

4. Fitting according to either Claim 1 or Claim 2, **characterized in that** the plain bearing bush (28) is connected to the bearing seat (29) by means of three tacking locations (33) which are distributed at an angle of 120° over the periphery of the plain bearing bush.

5. Fitting according to one of Claims 1 to 4, **characterized in that** the bearing seat (29) is secured to the first or second fitting member (11, 12) as a separate sleeve.

6. Fitting according to one of Claims 1 to 5, **characterized in that** the plain bearing bush (28) has a cylindrical basic shape and the two ends of the plain bearing bush (28) face each other in an unconnected state.

7. Fitting according to Claim 6, **characterized in that** the two ends of the plain bearing bush (28) face each other in an unconnected state.

8. Fitting according to one of Claims 1 to 7, **characterized in that** the plain bearing bush (28) has a wall thickness of approximately 0.5 mm.

9. Fitting according to one of Claims 1 to 8, **characterized in that** one of the two axial ends of the plain bearing bush (28) is turned over in a radially outward direction.

10. Fitting according to Claim 9, **characterized in that** one of the two axial ends of the plain bearing bush (28) is beaded in a radially outward direction.

11. Fitting according to Claim 9 or 10, **characterized in that** both axial ends of the plain bearing bush (28) are turned over in a radially outward direction.

12. Fitting according to Claim 11, **characterized in that** precisely one of the two turned-over ends is already turned over before the plain bearing bush (28) is mounted in the bearing seat (29).

13. Vehicle seat having a fitting according to one of Claims 1 to 12.

## Revendications

1. Ferrure pour un siège de véhicule, en particulier pour un siège de véhicule automobile, comprenant une première partie de ferrure (11) sur laquelle est réalisée une couronne dentée (17), une deuxième partie de ferrure (12) sur laquelle est réalisée une roue dentée (16) qui s'engrène avec la couronne dentée (17), de sorte que les deux parties de ferrure (11, 12) sont en liaison d'engrenage l'une avec l'autre, et un excentrique supporté à rotation, tournant dans la direction périphérique pour l'entraînement d'un mouvement de roulement relatif de la roue dentée (16) et de la couronne dentée (17), l'excentrique étant disposé dans la direction radiale avec son côté extérieur dans une douille de palier lisse (28) disposée dans un siège de palier (29), en particulier dans un profilé en forme de collet (29) de la première ou de la deuxième partie de ferrure (11, 12), **caractérisée en ce que** la douille de palier lisse (28) présente une épaisseur de paroi inférieure à 1 mm et est connectée par liaison de matière par soudage laser au siège de palier (29), le côté de roulement de la douille de palier lisse (28) étant revêtu de plastique.

2. Ferrure selon la revendication 1, **caractérisée en ce que** le siège de palier (29) est prévu au niveau de l'une des deux parties de ferrure (11, 12) et la douille de palier lisse (28) est connectée au siège de palier (29) dans la région du côté frontal de la douille de palier lisse (28) tourné à l'écart de l'autre des deux parties de ferrure (11, 12).

3. Ferrure selon l'une quelconque des revendications 1 et 2, **caractérisée en ce que** la douille de palier lisse (28) est connectée au siège de palier (29) au moyen d'un joint de soudure laser périphérique (31).

4. Ferrure selon l'une quelconque des revendications 1 et 2, **caractérisée en ce que** la douille de palier lisse (28) est connectée au siège de palier (29) au moyen de trois pointages (33) répartis suivant un angle de 120° sur la périphérie de la douille de palier lisse.

5. Ferrure selon l'une quelconque des revendications 1 à 4, **caractérisée en ce que** le siège de palier (29) est fixé en tant que douille séparée sur la première ou la deuxième partie de ferrure (11, 12) .

6. Ferrure selon l'une quelconque des revendications 1 à 5, **caractérisée en ce que** la douille de palier lisse (28) présente une forme de base cylindrique et les deux extrémités de la douille de palier lisse (28) sont situées en regard l'une de l'autre sans être connectées.

7. Ferrure selon la revendication 6, **caractérisée en ce que** les deux extrémités de la douille de palier lisse (28) sont situées en regard l'une de l'autre sans être connectées.

8. Ferrure selon l'une quelconque des revendications 1 à 7, **caractérisée en ce que** la douille de palier lisse (28) présente une épaisseur de paroi d'environ 0,5 mm.

9. Ferrure selon l'une quelconque des revendications 1 à 8, **caractérisée en ce que** l'une des deux extrémités axiales de la douille de palier lisse (28) est retournée radialement vers l'extérieur.

10. Ferrure selon l'une quelconque des revendications 9, **caractérisée en ce que** l'une des deux extrémités axiales de la douille de palier lisse (28) est rabattue radialement vers l'extérieur.

11. Ferrure selon la revendication 9 ou 10, **caractérisée en ce que** les deux extrémités axiales de la douille de palier lisse (28) sont retournées radialement vers l'extérieur.

12. Ferrure selon la revendication 11, **caractérisée en ce qu'**exactement l'une des deux extrémités retournées est déjà retournée avant le montage de la douille de palier lisse (28) dans le siège de palier (29).

13. Siège de véhicule comprenant une ferrure selon l'une quelconque des revendications 1 à 12.
